# EUROPÄISCHE PATENTSCHRIFT

(11) **EP 2 122 258 B1**
(45) Veröffentlichungstag und Bekanntmachung des Hinweises auf die Patenterteilung: **18.08.2010**
(21) Anmeldenummer: 08700281.2
(22) Anmeldetag: 17.01.2008
(51) Int. Cl.: F24D 10/00, F24D 19/10

(54) **VORRICHTUNG ZUR REGELUNG DER TEMPERATUR VON BRAUCHWASSER**
DEVICE FOR REGULATING THE TEMPERATURE OF INDUSTRIAL WATER
DISPOSITIF POUR RÉGULER LA TEMPÉRATURE D'EAU SANITAIRE

(30) Priorität: 25.01.2007 AT 1292007
(43) Veröffentlichungstag der Anmeldung: 25.11.2009
(73) Patentinhaber: Herz Armaturen GmbH, 1230 Wien (AT)
(72) Erfinder: STEINER, Johann, A-7121 Weiden Am See (AT)
(74) Vertreter: Wildhack, Andreas
(86) Internationale Anmeldenummer: PCT/AT2008/000014
(87) Internationale Veröffentlichungsnummer: WO 2008/089501

(56) Entgegenhaltungen:
- WO-A-2007/085256
- DE-C1- 19 618 093

## Beschreibung

Die Erfindung betrifft eine Vorrichtung gemäß dem Oberbegriff des Anspruches 1. Eine solche Vorrichtung ist aus Dokument EP-A-1 096 354 schon bekannt.

Aus dem Stand der Technik sind derartige Vorrichtungen zur Regelung der Temperatur von Brauchwasser für Wärmetauscher mittels eines thermostatisch gesteuerten Reglers bekannt, die, insbesondere bei der Trinkwassererwärmung, vor allem in kleineren Wohneinheiten eingesetzt werden. Vorrichtungen dieser Art werden insbesondere dort verwendet, wo warmes Wärmemedium zur Erwärmung des Brauchwassers verwendet wird und wo eine automatische Regelung der Zuleitung dieses Wärmemediums und somit der Temperatur des Brauchwassers erwünscht ist.

Die im Stand der Technik eingesetzten thermostatisch gesteuerten Regler regulieren den Strom des Wärmemediums durch den Wärmetauscher in einer Art und Weise, bei der das Brauchwasser eine durch den Thermostat vorgegebene Temperatur behält, die im Wesentlichen unabhängig von der Durchflussmenge des Brauchwassers ist. Bei der Regulierung der Temperatur wirkt das Thermostatventil ausschließlich auf das Wärmemediumventil, d.h. der Thermostat regelt nur die Durchflussmenge des Wärmemediums, wobei die Durchflussmenge des Brauchwassers unverändert bleibt.

Derartige Vorrichtungen aus dem Stand der Technik arbeiten üblicherweise nach folgendem Funktionsschema:

Bei Wasserentnahme beispielsweise bei geöffnetem Wasserhahn, öffnet das Brauchwasserventil und kaltes Brauchwasser strömt in den Wärmetauscher ein. Gleichzeitig öffnet auch das Wärmemediumventil und heißes Wärmemedium strömt in den Wärmetauscher ein. Dadurch wird das Brauchwasser erwärmt und tritt aus dem Wärmetauscher zum Wasserhahn hin aus. An dieser Stelle ist der Temperaturfühler des Thermostats angeordnet. Wenn das austretende Brauchwasser eine gewisse vorgegebene Temperatur überschreitet, wird das Wärmemediumventil gedrosselt oder geschlossen und es kommt zu einer Volumenstromreduzierung bzw. Absperrung des Wärmemediums. Dementsprechend gelangt weniger Wärmemedium in den Wärmetauscher. Die Durchstrommenge des kalten Brauchwassers wird jedoch nicht verringert. Die Temperatur am Ausgang des Wärmetausches fällt dementsprechend.

Bei Zapfende, d.h. bei Schließen des Wasserhahns, schließen das Brauchwasserventil und auch das Wärmemediumventil gleichzeitig.

Aus der EP 1 096 354 ist beispielsweise eine derartige Vorrichtung bekannt, die eine Kombination aus einem thermostatisch gesteuerten Regler und einem druckgesteuerten Regler darstellt. Der druckgesteuerte Teil der Vorrichtung ist in seinen Grundzügen ähnlich einem handelsüblichen PM-Regulator, beispielsweise der Firma Redan, aufgebaut, wobei über den druckgesteuerten Regler sowohl der Brauchwasserstrom als auch der Wärmemediumstrom reguliert werden. Bei dieser Ausführungsform ist ein Ventilsitz vorgesehen, der sich im Wärmemediumstrom befindet. Auf diesem Ventilsitz wirken zwei Ventilkegel ein, zum einen ein Ventilkegel des druckgesteuerten Reglers, zum anderen ein Ventilkegel des thermostatisch gesteuerten Reglers.

Ziel der Erfindung ist die Erstellung einer Vorrichtung der eingangs genannten Art, die konstruktiv einfach und betriebssicher ist und eine unabhängige Regelung bzw. wechselwirkungsfreie Regelung von Brauchwasser und Wärmemedium ermöglicht.

Diese Ziele werden mit den Merkmalen des Kennzeichens des Anspruches 1 erreicht. Die beiden Regler und auch die beiden Ventilkegel arbeiten im wesentlichen vollkommen getrennt und unabhängig voneinander und wechselwirken in keiner Weise miteinander, weder mechanisch noch auf sonstige Weise. Der druckgesteuerte Regler reguliert die Durchstrommenge des Brauchwassers und des Wärmemediums, indem er bei Wasserabnahme sowohl den Fluss des Wärmemediums als auch den Fluss des Brauchwassers gestattet und bei Zapfende sowohl den Fluss des Wärmemediums als auch den Fluss des Brauchwassers stoppt. Völlig unabhängig davon wirkt der thermostatisch gesteuerte Regler zusätzlich und ausschließlich auf die Durchstrommenge des Wärmemediums bzw. aufs Wärmemediumventil und kann diese Durchstrommenge bei Überschreiten einer gewissen Temperatur des Brauchwassers nach dem Wärmetauscher durch Schließen des Wärmemediumventils verringern oder ganz unterbinden. Der thermostatisch gesteuerte Regler ist mechanisch nicht mit dem druckgesteuerten Regler verbunden und steht auch in keiner direkten oder indirekten Wirkverbindung mit diesem. Der thermostatisch gesteuerte Regler stellt somit eine Art unabhängige Überregulierung des Wärmemediumstromes dar.

Bei der erfindungsgemäßen Vorrichtung werden die Vorteile eines druckgesteuerten Reglers und eines thermostatisch gesteuerten Reglers kombiniert. Die Thermostaten sprechen in der Regel schnell an und regeln die Wassertemperatur ohne nennenswerten Verzug auf den gewünschten Wert. Weiters werden durch den druckgesteuerten Regler unmittelbar nach Ende der Wasserentnahme der Brauchwasserstrom und der Mediumwasserstrom geschlossen. Dies verhindert ein Nacherhitzen des erwärmten Trinkwassers, Temperaturspitzen treten nicht mehr auf und es wird auch einer möglichen Verkalkung des Wärmeüberträgers bzw. des Wärmetauschers entgegengewirkt.

Zur Entkopplung der Funktion des druckgesteuerten Reglers und des thermostatisch gesteuerten Reglers sind die Merkmale des Anspruches 2 von Vorteil.

Eine Unterstützung der Entkopplung erfolgt durch die Merkmale des Anspruches 3.

Eine den Ansprüchen völlig gerecht werdende exakte Regelung des Brauchwassers wird mit den Merkmalen der Ansprüche 4 und/oder 5 erreicht.

Ein konstruktiv einfacher Aufbau der Vorrichtung wird mit den Merkmalen der Ansprüche 6 und/oder 7 und/oder 8 erreicht.

Eine Vereinfachung der Herstellung und der Bedienung ergeben sich, wenn die Merkmale des Anspruches 9 verwirklicht sind.

Eine exakte Regelung ergibt sich, wenn die Merkmale der Ansprüche 10 und/oder 11 verwirklicht sind.

Der Aufbau und die Wirkungsweise des thermostatisch gesteuerten Reglers werden durch Verwirklichung der Merkmale der Ansprüche 12 und/oder 13 verbessert bzw. kann damit das Regelungsverhalten der Vorrichtung verbessert werden.

Das Regelverhalten der Vorrichtung bzw. die Unabhängigkeit der Steuerung des Brauchwassers vom Fluss des Wärmemediums werden unterstützt bzw. gewährleistet mit den Merkmalen des Anspruches 13.

Ein einfacher aber belastungsfähiger Aufbau eines aus Kunststoff hergestellten druckgesteuerten Reglers ist durch die Merkmale des Anspruches 14 gegeben.

Der konstruktive Aufbau, sowohl für die Herstellung als auch für den Betrieb, wird vereinfacht, wenn die Merkmale des Anspruches 14 verwirklicht sind.

Die Erfindung betrifft des Weiteren jeglichen Heizkörperwärmetauscher oder eine vergleichbare Einrichtung, die mit einer Vorrichtung der erfindungsgemäßen Art versehen ist.

Im Folgenden wird die Erfindung anhand eines Ausführungsbeispiels näher erläutert:
Fig. 1 zeigt eine erfindungsgemäße Vorrichtung in Seitenansicht.
Fig. 2 zeigt die Vorrichtung in Draufsicht.
Fig. 3 zeigt einen Schnitt durch die Vorrichtung bei geschlossenem Brauchwasserventil und geschlossenem Wärmemediumventil.
Fig. 4 zeigt einen Schnitt durch die Vorrichtung bei offenem Brauchwasserventil und offenem Wärmemediumventil.
Fig. 5 zeigt einen Schnitt durch die Vorrichtung bei offenem Brauchwasserventil und geschlossenem Wärmemediumventil.

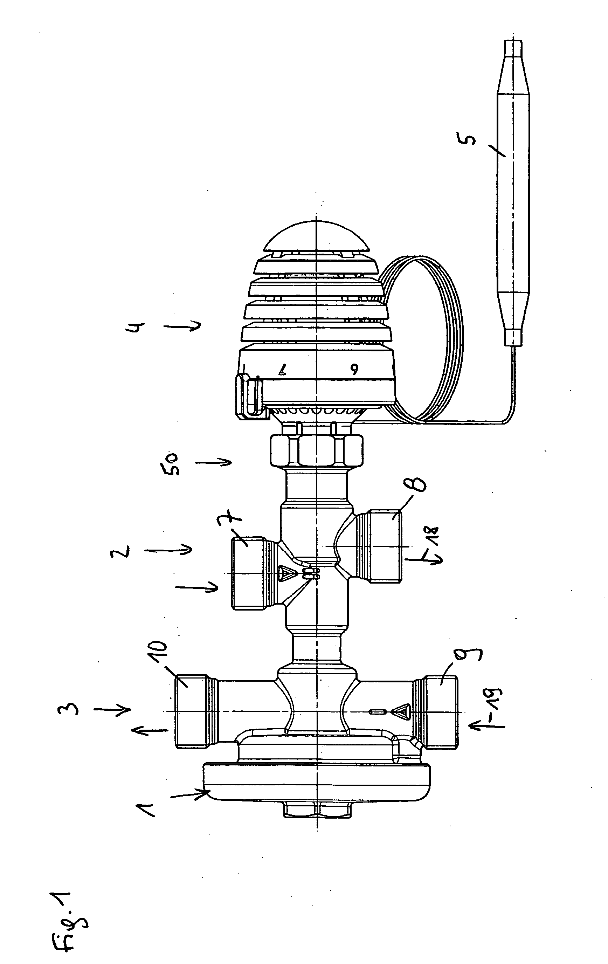

Fig. 1 zeigt eine Vorrichtung, umfassend einen druckgesteuerten Regler 1 sowie einen thermostatisch gesteuerten Regler 4. Der linke Teil der Vorrichtung ist dem grundlegenden Aufbau nach ähnlich aufgebaut wie ein aus dem Stand der Technik bekannter PM-Regulator der Firma Redan®. Die Vorrichtung weist in ihrem linken Bereich einen Brauchwasserteil 3 und in ihrem mittleren Bereich einen Fernwärmeteil 2 auf. Der thermostatisch gesteuerte Regler 4 befindet sich ganz rechts direkt neben dem Fernwärmeteil 2 und ist an diesen mechanisch angekoppelt bzw. steht in Wirkverbindung mit diesem. Zwischen dem Fernwärmeteil 2 und dem thermostatisch gesteuerten Regler 4 ist ein Zwischenelement 50 angeordnet.

Im Brauchwasserteil 3 ist ein Zulaufstutzen 9 für den Brauchwasserzulauf 9 und ein Ablaufstutzen 10 für den Brauchwasserablauf 10 vorgesehen. Brauchwasser 19 kann somit, wie von den Pfeilen in den Zeichnungen verdeutlicht, von der Wasserversorgung kommend, durch den Brauchwasserzulauf 9 einströmen und verlässt die Vorrichtung durch den Brauchwasserablauf 10 in Richtung des in der Zeichnung nicht dargestellten Wärmetauschers.

Der rechts direkt anschließende Fernwärmeteil 2 umfasst ebenfalls einen Stutzen für den Wärmemediumzulauf 7 und einen Stutzen für den Wärmemediumablauf 8. Auf diese Weise kann Wärmemedium 18 ausgehend vom Fernheizwerkvorlauf über den nicht dargestellten Wärmetauscher und den Wärmemediumzulauf 7 in die Vorrichtung einströmen und verlässt diese über den Wärmemediumablauf 8 in Richtung des Fernheizwerkrücklaufes.

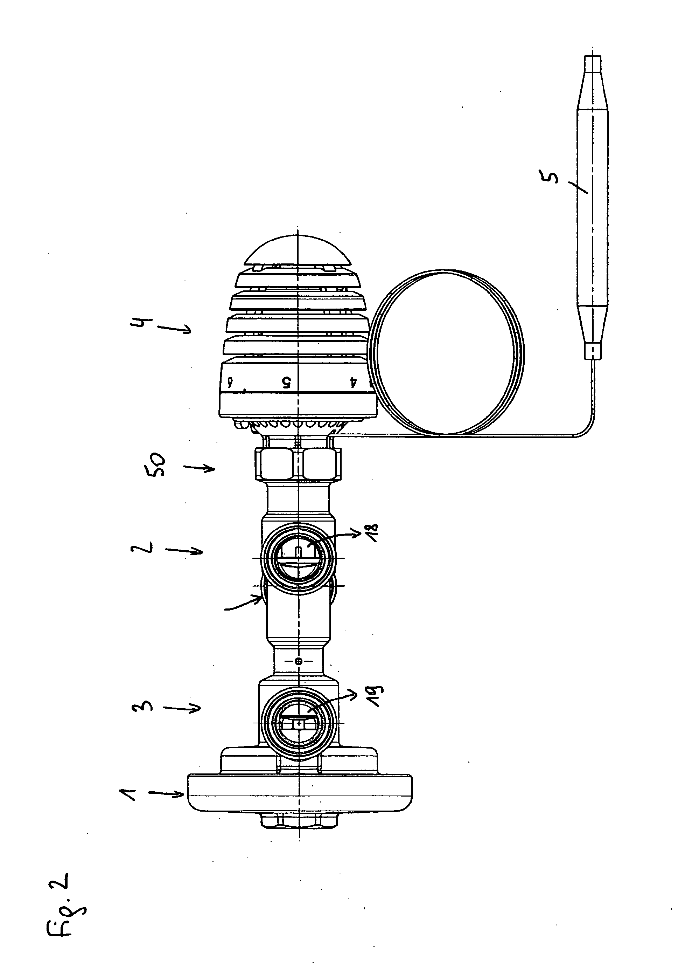

In Fig. 2 ist eine Draufsicht auf die erfindungsgemäße Vorrichtung dargestellt.

Bei der vorliegenden Ausführungsform der Vorrichtung sind die Stutzen des Brauchwasserzulaufs 9 und des Brauchwasserablaufs 10 und auch des Wärmemediumzulaufs 7 und des Wärmemediumablaufs 8 um 180° bezüglich des mittleren Zentralrohres zueinander versetzt axial zueinander angeordnet. Bei alternativen Ausführungsformen ist eine rechtwinkelige Ausrichtung der Stutzen zueinander ebenfalls möglich.

Der thermostatisch gesteuerte Regler 4 umfasst ein Stellglied mit einem Temperaturfühler 5, der die Temperatur des Brauchwassers abfühlt. Im Prinzip kann es sich bei dem thermostatisch gesteuerten Regler 4 um jede beliebige Art eines thermostatisch gesteuerten Reglers handeln, beispielsweise kommen auch elektrische Regler in Frage.

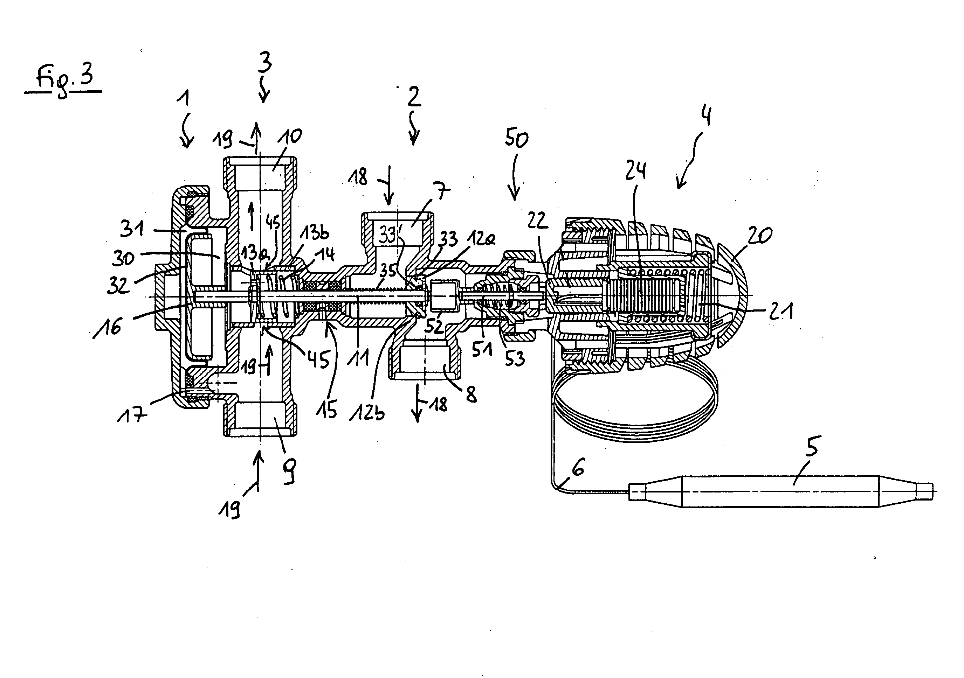

Der thermostatisch gesteuerte Regler 4 bewirkt bzw. verursacht eine Stellkraft, mit der das den Wärmemediumstrom regulierende Ventil 12a, 12b angesteuert bzw. geschlossen werden kann. Eine detaillierte Darstellung des thermostatisch gesteuerten Reglers 4 ist in Fig. 3 ersichtlich, auf die später genauer eingegangen wird

In Fig. 3 ist die Vorrichtung schematisch im Querschnitt dargestellt. Alle Ventile der Vorrichtung befinden sich gemäß Fig. 3 in geschlossener Stellung, sodass weder Brauchwasser 19 noch Wärmemedium 18 strömen können. Die Ventile nehmen diese geschlossene Stellung ein, wenn kein Wasser vom Brauchwasserauslauf 10 entnommen wird.

Im Brauchwasserteil 3 der Vorrichtung, durch den das Brauchwasser 19 strömt, ist ein Brauchwasserventil 13a, 13b ausgebildet, das einen beweglichen Brauchwasserventilverschlussteil 13a und einen Brauchwasserventilsitz 13b umfasst. Der Brauchwasserventilverschlussteil 13a kann als Kolben, als Kegel, als Schieber oder als Klappe ausgebildet sein und muss dazu geeignet sein, den Brauchwasserstrom zu regulieren und insbesondere zu unterbinden.

Der Brauchwasserventilverschlussteil 13a ist durch eine Spiraldruckfeder 14 vorgespannt, die im Inneren des Brauchwasserventilverschlussteils 13a bzw. des Brauchwasserventilsitzes 13b, um eine Kegelstange 11 herum angeordnet ist. Die Feder 14 übt eine in Fig. 3 nach links, in Schließrichtung des Brauchwasserventils 13a,13b gerichtete Kraft aus und zieht damit auch den Wärmemediumventilverschlussteil 12a über die Kegelstange 11 in Richtung auf den Wärmemediumventilsitz 12b und verschließt damit auch das Wärmemediumventil 12a,12b. Die Feder 14 wirkt somit gegen die vom druckgesteuerten Regler 1 und die von der Feder 35 ausgeübte Kraft und schließt bei nachlassendem Druck des druckgesteuerten Reglers 1 sowohl das Brauchwasserventil 13a,13b als auch das Wärmemediumventil 12a,12b über die entsprechenden Verschlussteile 12a,13a.

Der Brauchwasserventilverschlussteil 13a ist in Fig. 3 in seiner maximal linken Position dargestellt und verschließt in dieser Stellung den Brauchwasserstrom 19. In der Praxis könnte eine Leckagemenge an Brauchwasser durchtreten; derartige Leckverluste spielen für die Funktion der Kegelstange 11 keine Rolle.

Im Brauchwasserventil 13a, 13b, genauer gesagt im Brauchwasserventilsitz 13b sind zwei einander gegenüberliegende Durchström-Öffnungen 45 ausgebildet. Die Öffnungen 45, insbesondere die untere, dem Zulauf 9 zugewendete, strömungsaufwärts gelegene Öffnung 45 weisen langgestreckte z.B. längsovale oder rechteckförmige Form auf und sind mit ihrer Längsrichtung quer zur Erstreckung der Kegelstange 11 ausgerichtet. Die Öffnungen 45 gestatten die Durchströmung des Brauchwassers 19 vom Zulauf 9 zum Ablauf 9 so lange das Brauchwasserventil 13a, 13b geöffnet ist. Die Bewegung des Brauchwasserventilverschlussteil 13a nach links in Richtung des druckgesteuerten Reglers 1 verschließt zumindest die in Fig. 3 unten gelegene, dem Zulauf 9 zugewendete Öffnung 45, wodurch der Brauchwasserstrom 19 gestoppt wird.

Der Brauchwasserventilverschlussteil 13a ist fix und unbewegbar auf einer Kegelstange 11 geführt bzw. befestigt, wobei die Kegelstange 11 mit ihrem linken äußeren Ende mit dem druckgesteuerten Regler 1 in Wirkverbindung steht. Derartige druckgesteuerte Regler 1 sind an sich aus dem Stand der Technik bekannt.

Die Kegelstange 11 endet, wie in Fig. 3 ersichtlich, mit ihrem linken äußeren Endbereich in einem Membranteller 16 oder liegt an diesem an bzw. ist mit diesem verbunden. Der Membranteller 16 kann auf das Ende der Kegelstange 11 auch lediglich aufgesteckt sein und kann damit leicht abgenommen bzw. ausgetauscht werden. Die dem Brauchwasserventil 13a,13b zugewendete Fläche des Membrantellers 16 kann acht gleichmäßig über den Umfang verteilte, radial zur Mitte des .Membrantellers 16 hin ausgerichtete Lamellen mit dazwischenliegenden Zwischenräumen aufweisen, welche Lamellen die Steifigkeit des Membrantellers 16 erhöhen. Der Membranteller 16 liegt in einem abgeschlossenen Hohlraum und teilt diesen Hohlraum in zwei Hohlbereiche, einen rechten Hohlbereich 30 und einen linken Hohlbereich 31. Die beiden Hohlräume sind durch eine Membran 32 fluidtechnisch voneinander getrennt. In Fig. 3 befindet sich der Membranteller ganz links bzw. in seiner linken Endlage und der linke Hohlbereich 31 ist klein, während der rechte Hohlbereich 30 entsprechend groß ist. Im Bereich des Brauchwasserzulaufes 9 ist eine Bohrung 17 vorgesehen, die den Hohlbereich 31 des Hohlraums mit dem Brauchwasserzulauf 9 fluidtechnisch verbindet.

Im Fernwärmeteil 2 der Vorrichtung befindet sich ein den Wärmemediumstrom 18 regulierendes Wärmemediumventil 12a, 12b, das einen beweglichen Wärmemediumventilverschlussteil 12a und einen Wärmemediumventilsitz 12b umfasst. Das Wärmemediumventil 12a, 12b verschließt in Fig. 3 den Wärmemediumstrom 18 vollständig. Der Wärmemediumventilverschlussteil 12a kann verschiedenartig ausgestaltet sein und beispielsweise als Kolben, Kegel, Schieber oder Klappe ausgebildet sein. Weiters ist eine Ringdichtung 33 vorgesehen, die für eine entsprechende Abdichtung zwischen dem Ventilverschlussteil 12a und dem Ventilsitz 12b sorgt.

Der Wärmemediumventilverschlussteil 12a ist auf der Kegelstange 11 beweglich bzw. verstellbar bzw. von dieser entkoppelt relativ zur Längserstreckung der Kegelstange 11 gelagert. Die Kegelstange 11 durchsetzt das Wärmemediumventil 12a, 12b bzw. den Wärmemediumventilverschlussteil 12a zentral und der Bauteil 12a kann auf der Kegelstange 11 entlang gleiten. Der Wärmemediumverschlussteil 12a ist gegenüber der Kegelstange 11 mit einer umlaufenden Dichtung 33' abgedichtet. Die Reibkräfte zwischen dem Dichtungsring 33', den Bauteilen 12a und der Kegelstange 11 werden gering gehalten.

Im Bereich des Wärmemediumventils 12a,12b ist eine weitere, im Vergleich zur Feder 14 schwächere, Feder 35 angeordnet. Diese weitere Feder 35 wirkt in Öffnungsrichtung des Wärmemediumventils 12a, 12b in entgegengesetzter Richtung zu der vom thermostatisch gesteuerten Regler 4 auf den Wärmemediumventilverschlussteil 12a ausgeübten Kraft. Die Feder 35 drückt den Wärmemediumventilverschlussteil 12a aus dem Wärmemediumventilsitz 12b hinaus. Dies ist nur dann möglich, wenn der Wärmemediumventilverschlussteil 12a bzw. die Kraft dieser Feder 35 nicht durch den druckgesteuerten Regler 1 und/oder den thermostatisch gesteuerten Regler 4 überreguliert und nach links auf den Wärmemediumventilsitz 12b gezogen bzw. gedrückt wird.

Die Kraft der weiteren Feder 35 ist kleiner als bzw. vernachlässigbar klein gegenüber der Kraft der Feder 14.

Die Kegelstange 11 verläuft, wie beispielsweise in Fig. 3 bis 5 ersichtlich, ausgehend vom druckgesteuerten Regler 1 bzw. vom Membranteller 16 über das Brauchwasserventil 13a, 13b bis zum Wärmemediumventil 12a, 12b. Zwischen dem Brauchwasserventil 13a, 13b und dem Wärmemediumventil 12a, 12b befindet sich eine Stopfbuchse 15, in der die Kegelstange 11 zwar gedichtet, aber dennoch beweglich für axial gerichtete Bewegungen hinsichtlich ihrer Längsachse gelagert ist. Die Kegelstange 11 kann somit lediglich axial gerichtete Bewegungen ausführen.

Am rechten äußersten Ende der Kegelstange 11 befindet sind ein Stoppelement, beispielsweise ein Sicherungsring, der einseitig an dem Wärmemediumventilverschlussteil 12a anliegt bzw. anlegbar ist. Dadurch wird der Wärmemediumventilverschlussteil 12a bei einer Bewegung der Kegelstange 11 nach links zwar mitgenommen und ebenfalls nach links gezogen, bei einer Bewegung der Kegelstange 11 nach rechts, kann der Wärmemediumventilverschlussteil 12a jedoch in seiner Position verbleiben. Der druckgesteuerte Regler 1 wirkt somit auf das Wärmemediumventil 12a,12b ausschließlich in Schließrichtung.

In Fig. 3 ist somit die Stellung der Vorrichtung dargestellt, bei der sowohl das Brauchwasserventil 13a,13b als auch das Wärmemediumventil 12a,12b verschlossen sind. Der Verschluss des Brauchwasserventils 13a,13b und des Wärmemediumventils 12a,12b erfolgt in Fig. 3 ausschließlich durch die Feder 14. Der thermostatisch gesteuerte Regler 4 wirkt nicht auf das Wärmemediumventil 12a,12b ein bzw. berührt den Wärmemediumventilverschlussteil 12a nicht.

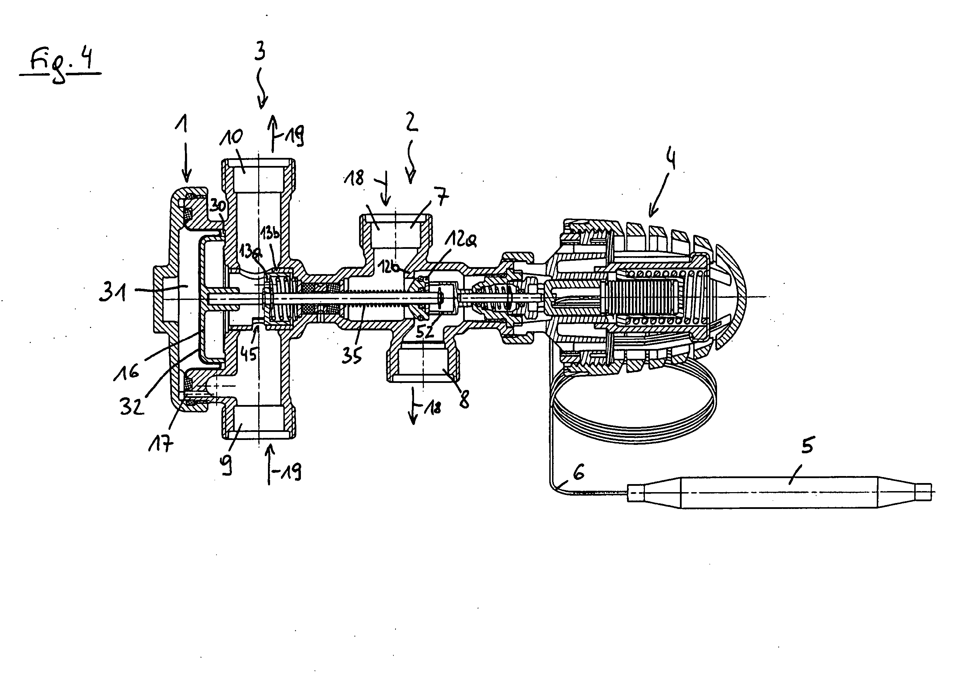

In Fig. 4 ist die Vorrichtung in geöffneter Durchflussstellung dargestellt. Sowohl das Brauchwasserventil 13a,13b als auch das Wärmemediumventil 12a,12b sind geöffnet. Eine derartig geöffnete Stellung beider Ventile 12,13 ist dann gegeben, wenn über den Brauchwasserablauf 10 Brauchwasser 19 in einer gewissen Mindestmenge abgenommen wird. Dies kann beispielsweise dadurch geschehen, dass ein dem Wärmetauscher nachgeschalteter Zapfhahn bzw. Wasserhahn geöffnet wird. Dadurch entsteht im Brauchwasserablauf 10 und somit auch in dem mit diesem, in Verbindung stehenden, bezüglich der Membran 32 rechten Hohlbereich 30 ein Unterdruck. Im Brauchwasserzulauf 9, der mit dem linken Hohlbereich 31 über die Bohrung 17 in Verbindung steht, bleibt der Druck beim Öffnen des Zapfhahnes hoch. Dadurch wird, ausgelöst durch die Druckdifferenz, eine Kraft gebildet, die der Druckfeder 14 entgegenwirkt, die Kegelstange 11 nach rechts bewegt und das Brauchwasserventil 13a, 13b öffnet, indem die Feder 14 zusammengedrückt und der Brauchwasserventilverschlussteil 13a nach rechts verschoben wird. Der Durchfluss durch die Öffnungen 45 wird dadurch freigegeben. Brauchwasser 19 kann somit im Wesentlichen ungehindert durch den Brauchwasserteil 3 in Richtung des Wärmetauschers fließen.

Durch die Bewegung der Kegelstange 11 nach rechts wird auch das Wärmemediumventil 12a, 12b geöffnet, indem der Wärmemediumventilverschlussteil 12a freigegeben wird und nicht mehr durch den Sicherungsring der Kegelstange 11 in Verschlussstellung zurückgehalten wird. Der Wärmemediumventilverschlussteil 12a wird durch die Kraft der Feder 35 aus dem Wärmemediumventilsitz 12b herausgedrückt. Auf diese Weise entsteht zwischen dem Wärmemediumventilverschlussteil 12a und dem Wärmemediumventilsitz 12b ein Ringspalt, der die Durchflussmenge des Wärmemediums 18 bestimmt.

In Fig. 4 ist die maximal offene Stellung sowohl des Brauchwasserventils 13a, 13b als auch des Wärmemediumventils 12a, 12b dargestellt und maximaler Durchstrom des Brauchwassers 19 und des Wärmemediums 18 ist gegeben.

Mit Zapfende, d.h. bei Schließen des Brauchwasserhahnes, stellt sich gemäß Fig. 3 wieder ein Druckausgleich ein. Der Staudruck im Brauchwasserablauf 10 sowie im rechten Hohlbereich 30 steigt, der Membranteller 16 wird nach links gedrückt. Die unterstützende Kraft der Feder 14 bewegt den Brauchwasserventilverschlussteil 13a wieder nach links und die Öffnungen 45 werden wieder verschlossen. Gleichzeitig wird der Wärmemediumventilverschlussteil 12a ebenfalls nach links in den Wärmemediumventilsitz 12b hineingezogen, sodass sowohl der Brauchwasserstrom 19 als auch der Wärmemediumsstrom 18 wieder verschlossen werden.

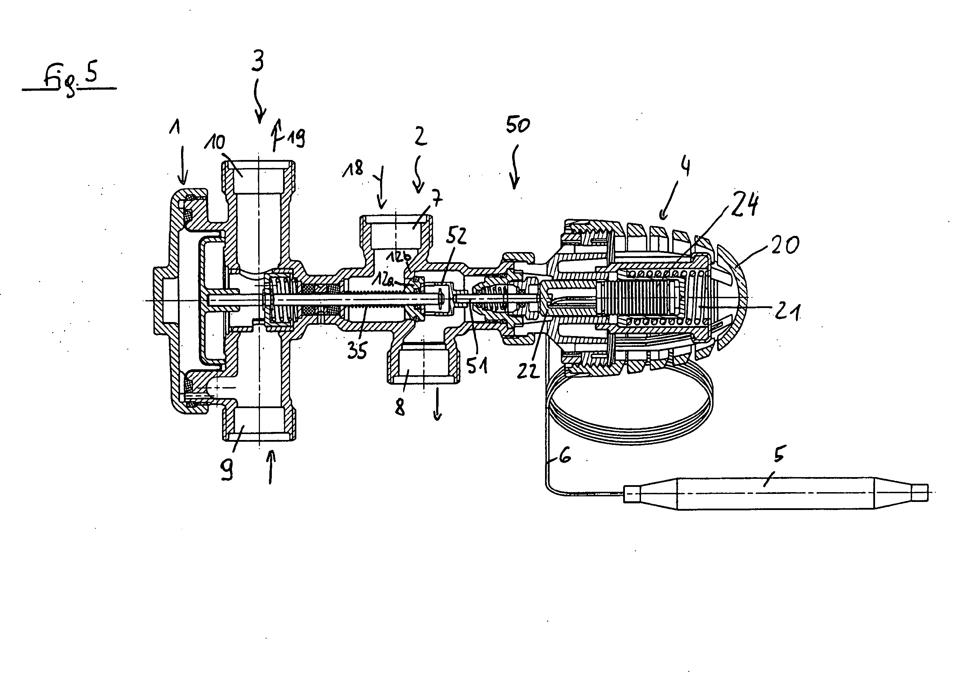

In Fig. 5 ist die Vorrichtung in einer Stellung gezeigt, bei der das Brauchwasserventil 13a,13b geöffnet, jedoch das Wärmemediumventil 12a,12b geschlossen ist.

Die Schließung des Wärmemediumventils 12a,12b erfolgt durch Überregulierung bzw. Druckbeaufschlagung des Wärmemediumventils 12a,12b durch den thermostatisch gesteuerten Regler 4. Dieser drückt den Wärmemediumventilverschlussteil 12a entgegen der Kraft der Feder 35 nach links in den Wärmemediumventilsitz 12b hinein. Die Kegelstange 11 und das Brauchwasserventil 13a,13b bleiben unverändert in ihren Positionen.

Der thermostatisch gesteuerte Regler 4 umfasst, wie in Fig. 3 bis 5 ersichtlich, einen Temperaturfühler bzw. ein Stellglied 5 und ein von einem Ausdehnungselement 24 verstellbares Zwischenstück 22. Weiters ist ein Sollwertgeber 20 vorgesehen. Der Sollwertgeber 20 ist drehbar am Gehäuse des Reglers 4 gelagert. Durch Drehen des Sollwertgebers 20 in die eine oder andere Richtung wird über den zurückgelegten Weg der Sollwert für die Temperatur des Brauchwassers 19 eingestellt. Entsprechend wird dabei das Zwischenstück 22 in eine Ausgangsposition verfahren, die einer Sollwert-Temperatur des Brauchwassers 19 zugeordnet ist. Der Temperaturfühler 5 des Reglers 4, der die Temperatur des Brauchwassers am Ausgang des Wärmetauschers misst, ist über eine Kapillarröhre 6 mit dem Regler 4 bzw. dem Ausdehnungselement 24 verbunden bzw. mündet die Kapillarröhre 6 in das Ausdehnungselement 24. Der Temperaturfühler 5 und das Ausdehnungselement 24 arbeiten nach dem Tensionsprinzip und sind in üblicher Weise mit Flüssigkeit gefüllt, die beispielsweise temperaturabhängig verdampft, wobei im Fühler 5 ein temperaturproportionaler Druck entsteht. Die abgefühlte Temperatur bedingt die Flüssigkeitszuleitung über die Kapillarröhre 6 hin zum Ausdehnungselement 24 in bekannter Weise. Die Position des Ausdehnungselementes 24 und damit die Position des Zwischenstückes 22 relativ zur Stange 51 kann variiert werden bzw. ist einstellbar. Dies kann mittels des Sollwertgebers 20 erfolgen. Eine Feder 21 federt das Ausdehnungselement 24 im Fall von zu hohen Temperaturen ab.

Über die Kapillarröhre 6 wird dieser Druck in eine Stellkraft des Zwischenstückes 22 umgewandelt, das auf das Wärmemediumventil 12a,12b im Fernwärmeteil 2 einwirkt.

Überschreitet die vom Temperaturfühler 5 gemessene Temperatur, d.h. die Istwert-Temperatur, die eingestellte Sollwert-Temperatur, so wird das Zwischenstück 22 um eine der Temperaturdifferenz zwischen Istwert-Temperatur und Sollwert-Temperatur zugeordnete Hubhöhe nach links bewegt. Durch eine Bewegung der Kegelstange 51 nach links kann der Wärmemediumventilverschlussteil 12a in die gleiche Richtung ebenfalls nach links bewegt werden. Unterschreitet die vom Temperaturfühler 5 gemessene Istwert-Temperatur die Sollwert-Temperatur, so wird das Zwischenstück 22 um eine der Temperaturdifferenz zwischen Istwert- und Sollwert-Temperatur zugeordnete Hubhöhe nach rechts bewegt.

Die Vorrichtung ist konstruktiv so ausgestaltet, dass zwischen dem Wärmemediumventilsitz 12b und dem Wärmemediumventilverschlussteil 12a ein Hubbereich bzw. eine gewisse Hubhöhe definiert ist. Dieser Hubbereich definiert die maximale Auslenkung bzw. Abhebung des Wärmemediumventilverschlussteils 12a vom Wärmemediumventilsitz 12b. Der in geöffnetem Zustand entstehende Ringspalt hat damit demgemäss diese maximale Hubhöhe.

Wird nun die der Wärmemediumventilverschlussteil 12a durch den thermostatisch gesteuerten Regler 4 um den Betrag dieser Hubhöhe nach links bewegt, so schließt das Wärmemediumventil 12a, 12b im wesentlichen dicht ab und der Strom des Wärmemediums 18 ist unterbrochen. Somit unterbleibt ein weiteres Aufheizen des Brauchwassers 19. Das nicht weiter erwärmte Brauchwasser 19 strömt weiterhin wie zuvor ohne Volumenstromminderung, da die Öffnung 45 weiterhin vollständig geöffnet ist. Die Temperatur des Brauchwassers 19 nimmt in Folge ab und der Temperaturfühler 5 detektiert eine geringere Temperatur. Wird eine gewisse Temperatur unterschritten, so reagiert der thermostatisch geregelte Regler 4 und das Stellglied 22 wird wieder nach rechts bewegt und das Ventil für das Wärmemedium 18 kann wieder strömen.

Die Kraft, mit der das Zwischenstück 22 bzw. das Ausdehnungselement 24 nach links drückt ist größer als die durch von der Feder 35 und der Feder 52 ausgeübte Gegenkraft.

Der thermostatisch gesteuerte Regler 4 wirkt somit ausschließlich auf den Wärmemediumventilverschlussteil 12a ein und verstellt diesen relativ zur Längserstreckung der Kegelstange 11, wobei die Kegelstange 11 und das Brauchwasserventil 13a,13b frei von einer Druckbeaufschlagung bzw. Einwirkung durch den thermostatisch gesteuerten Regler 4 bleiben.

Gemäß der in den Fig. dargestellten Ausführungsform wirkt der thermostatisch gesteuerte Regler 4 auf das Wärmemediumventil 12a,12b bzw. den Wärmemediumventilverschlussteil 12a nicht direkt ein, sondern über ein, zwischen dem thermostatisch gesteuerten Regler 4 und dem Wärmemediumventil 12a,12b angeordnetes, Zwischenelement 50. Dieses Zwischenelement 50 weist eine, in Verlängerung zur Kegelstange 11 ausgerichtete, Zwischenkegelstange 51 auf, an deren, dem Wärmemediumventil 12a,12b zugewendeten, Ende zumindest ein Druckelement 52, z.B. in Form einer geschlitzten Glocke, angeordnet ist.

Die Form des Druckelementes 52 ist so gewählt, dass durch dessen Formgebung nur das Wärmemediumventil 12a,12b bzw. der Wärmemediumventilverschlussteil 12a, aber nicht die Kegelstange 11 bzw. das Brauchwasserventil 13a,13b druckbeaufschlagt bzw. berührt werden. Gemäß Fig. 3 bis 5 kann das Druckelement 52 zumindest einen, vorzugsweise drei längs des Umfangs eines Kreises angeordnete, Druckstifte aufweisen. Das dem druckgesteuerten Regler 1 ferne, rechte Ende der Kegelstange 11 liegt innerhalb dieses Kreises und wird von den Druckstiften umfasst.

Die Kegelstange 11 und/oder die Zwischenkegelstange 51 sind jeweils aus einem durchgehenden Element einstückig ausgebildet. Sie können aber auch aus mehreren miteinander axial zusammenwirkenden bzw. kraft- und/oder formschlüssig miteinander verbundenen Einzelelementen zusammengesetzt sein.

Die Vorrichtung ist vorteilhafterweise einteilig aufgebaut, d.h. das Brauchwasserventil 13a,13b, das Wärmemediumventil 12a,12b, das Zwischenelement 50 und der druckgesteuerte Regler 1 sind in einem gemeinsamen einteiligen bzw. einstückigen Gehäuse aus Metall oder Kunststoff, angeordnet bzw. von einem gemeinsamen einteiligen Gehäuse umgeben. Dementsprechend sind zwischen dem Brauchwasserventil 13a,13b, dem Wärmemediumventil 12a,12b und dem druckgesteuerten Regler 1 keine Gewinde, Stöße oder dgl. ausgebildet, die zu einer strukturellen Schwächung der Vorrichtung führen.

Die Vorrichtung kann auch modular aufgebaut sein, wobei insbesondere der druckgesteuerte Regler 1 gemeinsam mit dem Brauchwasserteil 3, der Fernwärmeteil 2 und der thermostatisch gesteuerte Regler 4 als eigenständige, miteinander verbindbare Module ausgebildet sein können, die insbesondere abnehmbar bzw. auswechselbar sind. Der Brauchwasserteil 3 und der Fernwärmeteil 2 können insbesondere im Bereich der Stopfbuchse trennbar bzw. verbindbar sein.

## Patentansprüche

1. Vorrichtung zur Regelung der Temperatur von Brauchwasser (19), das mittels eines Wärmemediums (18), insbesondere mittels Fernheizwasser, in einem Wärmetauscher erwärmt wird, mit einem den Durchfluss des Brauchwassers (19) zum Wärmetauscher steuernden Brauchwasserventil (13a,13b) und einem den Durchfluss des Wärmemediums (18) vom Wärmetauscher steuernden Wärmemediumventil (12a,12b), wobei das Brauchwasserventil (13a,13b) einen Brauchwasserventilsitz (13b) und einen relativ dazu beweglichen, insbesondere zylindrischen oder kegelförmigen, Brauchwasserventilverschlussteil (13a) und das Wärmemediumventil (12a,12b) einen Wärmemediumventilsitz (12b) und einen relativ dazu beweglichen, insbesondere zylindrischen oder kegelförmigen, Wärmemediumventilverschlussteil (12a) umfasst, wobei das Brauchwasserventil (13a,13b) und das Wärmemediumventil (12a,12b) über eine Kegelstange (11) miteinander in Wirkverbindung stehen, wobei ein druckgesteuerter Regler (1) vorgesehen ist, der in Abhängigkeit von der Entnahme von Brauchwasser (19) auf die Kegelstange (11) und somit insbesondere auf das Brauchwasserventil (13a,13b) einwirkt bzw. dieses verstellt bzw. öffnet oder schließt, und wobei weiters ein thermostatisch gesteuerter Regler (4) vorgesehen ist, der, in Abhängigkeit von der Temperatur des Brauchwassers (19), insbesondere gemessen mit einem Temperaturfühler (5) nach dem Austritt des Brauchwassers (19) aus dem Wärmetauscher, ausschließlich auf das Wärmemediumventil (12a,12b), vorzugsweise direkt auf den Wärmemediumventilverschlussteil (12a), einwirkt bzw. dieses(n) verstellt,
**dadurch gekennzeichnet, dass** der Wärmemediumventilverschlussteil (12a) an bzw. auf der Kegelstange (11) beweglich bzw. verstellbar bzw. entkoppelt relativ zur Längserstreckung der Kegelstange (11) gelagert ist und der Brauchwasserventilverschlussteil (13a) fix und lagefest mit der Kegelstange (11) verbunden ist.

2. Vorrichtung nach Anspruch 1, **dadurch gekennzeichnet, dass** der thermostatisch gesteuerte Regler (4) ausschließlich auf den Wärmemediumventilverschlussteil (12a) einwirkt bzw. gegen diesen anlegbar ist und diesen relativ zur Längserstreckung der Kegelstange (11) verstellt, wobei insbesondere die Kegelstange (11) und/oder das Brauchwasserventil (13a,13b), vorzugsweise völlig, frei von einer Druckbeaufschlagung bzw. Einwirkung durch den thermostatisch gesteuerten Regler (4) sind.

3. Vorrichtung nach einem der Ansprüche 1 bis 2, **dadurch gekennzeichnet, dass** das Brauchwasserventil (13a,13b) vom druckgesteuerten Regler (1) so *steuerbar* ist, dass das Brauchwasserventil (13a,13b) offen ist, wenn Brauchwasser (19) entnommen wird bzw. zum Wärmetauscher fließt und dass das Brauchwasserventil (13a,13b) und das Wärmemediumventil (12a,12b) vom druckgesteuerten Regler (1), unabhängig vom thermostatisch gesteuerten Regler (4), so *steuerbar bzw. überregulierbar* sind, dass sowohl das Brauchwasserventil (13a,13b) als auch das Wärmemediumventil (12a,12b) geschlossen sind, wenn kein Brauchwasser (19) entnommen wird, wobei gegebenenfalls auch Zwischenstellungen vorgesehen sind und/oder dass der druckgesteuerte Regler (1) auf das Wärmemediumventil (12a,12b) ausschließlich in Schließrichtung wirkt.

4. Vorrichtung nach einem der Ansprüche 1 bis 3, **dadurch gekennzeichnet, dass** das Wärmemediumventil (12a,12b) vom thermostatisch gesteuerte Regler (4) so *steuerbar* ist, dass das Wärmemediumventil (12a,12b) offen ist, wenn die Temperatur des Brauchwassers (19) nach dessen Austritt aus dem Wärmetauscher unter einem gewissen Wert liegt und dass das Wärmemediumventil (12a,12b) geschlossen ist, wenn die Temperatur des Brauchwassers (19) diesen Wert überschreitet, wobei das Brauchwasserventil (13a,13b) unabhängig von der Stellung des Wärmemediumventils (12a,12b) weiterhin, insbesondere unverändert, vorzugsweise vollständig, geöffnet bleibt bzw. dass der thermostatisch gesteuerte Regler (4) das Wärmemediumventil (12a,12b) unabhängig von der Stellung des Brauchwasserventils (13a,13b) überreguliert bzw. schließt.

5. Vorrichtung nach einem der Ansprüche 1 bis 4, **dadurch gekennzeichnet, dass** der thermostatisch gesteuerte Regler (4) auf das Wärmemediumventil (12a,12b) bzw. den Wärmemediumventilverschlussteil (12a) über ein zwischen dem thermostatisch gesteuerten Regler (4) und dem Wärmemediumventil (12a,12b) angeordnetes Zwischenelement (50) einwirkt.

6. Vorrichtung nach Anspruch 5, **dadurch gekennzeichnet, dass** das Zwischenelement (50) eine von einem Zwischenstück (22) des thermostatisch gesteuerten Reglers (4) beaufschlagbare, insbesondere in Verlängerung zur Kegelstange (11) ausgerichtete, Zwischenkegelstange (51) aufweist, an deren dem Wärmemediumventil (12a,12b) zugewendeten Ende zumindest ein Druckelement (52), vorzugsweise in Form einer seitlich geschlitzten oder vorzugsweise drei längs des Umfangs eines Kreises angeordnete Druckstifte aufweisenden Glocke, ausgebildet ist, durch dessen Formgebung nur das Wärmemediumventil (12a,12b) bzw. der Wärmemediumventilverschlussteil (12a), aber nicht die Kegelstange (11) bzw. das Brauchwasserventil (13a,13b) druckbeaufschlagt bzw. berührt werden, *wobei die Zwischenkegelstange (51) vorzugsweise aus einem durchgehenden Element einstückig ausgebildet ist oder aus mehreren miteinander axial zusammenwirkenden bzw. kraft- und*/*oder formschlüssig miteinander verbundenen Einzelelementen zusammengesetzt ist.*

7. Vorrichtung nach einem der Ansprüche 1 bis 6, **dadurch gekennzeichnet, dass** die Kegelstange (11) aus einem durchgehenden Element einstückig ausgebildet ist oder aus mehreren miteinander axial zusammenwirkenden bzw. kraft- und/oder formschlüssig miteinander verbundenen Einzelelementen zusammengesetzt ist.

8. Vorrichtung nach einem der Ansprüche 1 bis 4, *oder, falls ein Zwischenelement (50) vorhanden ist, nach einem der Ansprüche 5 bis* 7, **dadurch gekennzeichnet, dass** das Wärmemediumventil (12a,12b) lagemäßig zwischen dem Brauchwasserventil (13a,13b) und dem thermostatisch gesteuerten Regler (4) bzw. dem Zwischenelement (50) angeordnet ist und/oder dass der druckgesteuerte Regler (1) und der thermostatisch gesteuerte Regler (4) in gegenüberliegenden Endbereichen der, insbesondere langgestreckten, Vorrichtung angeordnet sind.

9. Vorrichtung nach einem der Ansprüche 1 bis 8, **dadurch gekennzeichnet, dass** in der Vorrichtung zumindest eine Feder (14) vorgesehen ist, die im Bereich des Brauchwasserventils (13a,13b), insbesondere im Brauchwasserventilsitz (13b), angeordnet ist, wobei die Feder (14) den Brauchwasserventilverschlussteil (13a) in Schließrichtung des Brauchwasserventils (13a,13b) und damit auch den Wärmemediumventilverschlussteil (12a) über die Kegelstange (11) in Schließrichtung des Wärmemediumventils (12a,12b) drückt, und wobei die Feder (14) als Gegenkraft zu der vom druckgesteuerten Regler (1) ausgeübten Kraft wirkt und bei nachlassendem Druck des druckgesteuerten Reglers (1) sowohl das Brauchwasserventil (13a,13b) als auch das Wärmemediumventil (12a,12b) schließt.

10. Vorrichtung nach einem der Ansprüche 1 bis 9, **dadurch gekennzeichnet, dass** im Bereich des Wärmemediumventils (12a,12b) zumindest eine weitere, insbesondere im Vergleich zur Feder (14) schwächere, Feder (35) vorgesehen ist, die in Öffhungsrichtung des Wärmemediumventils (12a,12b) als Gegenkraft zu der vom thermostatisch gesteuerten Regler (4) auf den Wärmemediumventilverschlussteil (12a) ausgeübten Kraft wirkt, wobei die Kraft der weiteren Feder (35) kleiner ist als die Kraft der Feder (14), insbesondere vernachlässigbar klein gegenüber der Kraft der Feder (14).

11. Vorrichtung nach einem der Ansprüche 1 bis 10, **dadurch gekennzeichnet, dass** der thermostatisch gesteuerte Regler (4) bzw. der Temperaturfühler (5) nach dem Tensionsprinzip arbeiten, wobei im Temperaturfühler (5) ein temperaturproportionaler Druck gebildet wird, der über eine Kapillarröhre (6) an ein Ausdehnungselement (24) des Reglers (4) weitergegeben wird.

12. Vorrichtung nach einem der Ansprüche 6 bis 11, **dadurch gekennzeichnet, dass** der thermostatisch gesteuerte Regler (4) ein Zwischenstück (22) umfasst, das seine Stellkraft, insbesondere auf die Zwischenkegelstange (51) und somit auf den Wärmemediumventilverschlussteil (12a) überträgt, wobei die Ausgangsposition des Zwischenstücks (22) einer Sollwert-Temperatur des Brauchwassers (19) zugeordnet ist, und das Zwischenstück (22) bei einer höheren, durch den Temperaturfühler (5) ermittelten Istwert-Temperatur des Brauchwassers (19) um eine vorbestimmte, der Temperaturdifferenz zwischen Sollwert-Temperatur und Istwert-Temperatur zugeordnete, Hubhöhe in Schließrichtung des Wärmemediumventils (12a,12b) und bei einer niedrigeren Istwert-Temperatur des Brauchwassers (19) um eine vorbestimmte, der entsprechenden Temperaturdifferenz zugeordnete, gegenteilige Hubhöhe in Öffnungsrichtung des Wärmemediumventils (12a,12b) bewegt wird.

13. Vorrichtung nach einem der Ansprüche 1 bis 12, **dadurch gekennzeichnet, dass** zwischen dem Brauchwasserzulaufstutzen (9) und dem Brauchwasserventil (13a,13b) im Brauchwasserventilsitz (13b) zumindest zwei, vorzugsweise gegenüberliegende, insbesondere längliche und vorzugsweise quer zur Längserstreckung der Kegelstange (11) ausgerichtete, Durchstrom-Öffnungen (45) für das Brauchwasser (19) ausgebildet sind, von denen zumindest eine, vorzugsweise beide durch den Brauchwasserventilverschlussteil (13a) zumindest teilweise, insbesondere zur Gänze, verschließbar sind und/oder dass der druckgesteuerte Regler (1) einen Membranteller (16) aufweist, der auf das Ende der Kegelstange (11) abnehmbar aufgesteckt bzw. aufgeschoben ist, wobei insbesondere die dem Brauchwasserventil (13a,13b) zugewendete Fläche des Membrantellers (16) eine Anzahl, vorzugsweise acht, insbesondere gleichmäßig verteilte, radial zur Mitte des Membrantellers (16) hin ausgerichtete, Stützlamellen aufweist.

14. Vorrichtung nach einem der Ansprüche 1 bis 13, **dadurch gekennzeichnet, dass** das Brauchwasserventil (13a,13b), das Wärmemediumventil (12a,12b), der druckgesteuerte Regler (1), das Zwischenelement (50) und gegebenenfalls auch der thermostatisch gesteuerte Regler (4), in einem gemeinsamen einteiligen Gehäuse angeordnet bzw. von einem gemeinsamen einteiligen Gehäuse umgeben sind oder dass die Vorrichtung modular aufgebaut ist und insbesondere der druckgesteuerte Regler (1) gemeinsam mit dem Brauchwasserteil (3), der Fernwärmeteil (2) und der thermostatisch gesteuerte Regler (4) als miteinander verbindbare Module vorliegen.

15. Heizkörper *oder* Wärmetauscher mit einer Vorrichtung nach einem der Ansprüche 1 bis 14.

## Claims

1. Device for regulating the temperature of service water (19), which is heated in a heat exchanger by means of a heating medium (18), particularly by means of distant heating water" comprising a service water valve (13a, 13b), which controls flowing through of the service water (19) towards said heat exchanger, and a heating medium valve (12a, 12b), which controls flowing through of the heating medium (18) from said heat exchanger, wherein said service water valve (13a, 13b) includes a service water valve seat (13b) and a service water valve locking part (13a) movable relative to it and being, in particular, cylindrical or conical, whereas said heating medium valve (12a, 12b) includes a heating medium valve seat (12b) and a heating medium valve locking part (12a) movable relative to it and being, in particular, cylindrical or conical, said service water valve (13a, 13b) and said heating medium valve (12a, 12b) cooperating with each other by a wedge bar (11), wherein a pressure controlled regulator (1) is provided, which acts onto said wedge bar (11) and, thus, in particular onto said service water valve (13a, 13b) or adjusts it or opens or closes it in dependence on withdrawal of service water (19), and wherein moreover a thermostatically controlled regulator (4) is provided, which acts exclusively onto said heating medium valve (12a, 12b), preferably directly onto said heating medium valve locking part (12a) or adjusts it, in dependence on the temperature of the service water (19), which in particular is measured by a temperature sensor (5) after the exit of the service water (19) from said heat exchanger,
**characterised in that** said heating medium valve locking part (12a) is movably or adjustably or in a decoupled way relative to the longitudinal extension supported on or by said wedge bar (11), whereas said service water valve locking part (13a) is connected to said wedge bar (11) in a fixed and position stable manner.

2. Device according to claim 1, **characterised in that** said thermostatically controlled regulator (4) acts on or engages exclusively said heating medium valve locking part (12a), adjusting it relative to the longitudinal extension of said wedge bar (11), wherein particularly said wedge bar (11) and/or said service water valve (13a, 13b) is (are), as preferred completely, free of any pressure bias or action by said thermostatically controlled regulator (4).

3. Device according to claim 1 to 2, **characterised in that** said service water valve (13a, 13b) is controllable by said pressure controlled regulator (1) in such a manner, that said service water valve (13a, 13b) is open, if service water (19) is withdrawn or flows towards said heat exchanger, and that said service water valve (13a, 13b) and said heating medium valve (12a, 12b) are controllable or can be overridden independently from said thermostatically controlled regulator (4) by said pressure controlled regulator (4) in such a manner, that both said service water valve (13a, 13b) and said heating medium valve (12a, 12b) are closed, if no service water (19) is withdrawn, wherein optionally intermediate positions are also provided and/or said pressure controlled regulator (1) acts onto said heating medium valve (12a, 12b) exclusively in closing direction.

4. Device according to any of claims 1 to 3, **characterised in that** said heating medium valve (12a, 12b) is controllable by said thermostatically controlled regulator (4) in such a manner, that said heating medium valve (12a, 12b) is open, if the temperature of the service water (19) after its exit from said heat exchanger is below a certain value, and that said heating medium valve (12a, 12b) is closed, if the temperature of the service water (19) exceeds this value, wherein said service water valve (13a, 13b) remains further open, particularly in an unchanged manner, preferably completely, independent from the position of said heating medium valve (12a, 12b), or that said thermostatically controlled regulator (4) overrides or closes said heating medium valve (12a, 12b) independent from the position of said service water valve (13a, 13b).

5. Device according to any of claims 1 to 4, **characterised in that** said thermostatically controlled regulator (4) acts onto said heating medium valve (12a, 12b) or onto said heating medium valve locking part (12a) via an intermediate member (50) arranged between said thermostatically controlled regulator (4) and said heating medium valve (12a, 12b).

6. Device according to claim 5, **characterised in that** said intermediate member (50) comprises an intermediate wedge bar (51) to be biased by an intermediate part (22) of said thermostatically controlled regulator (4), particularly being oriented in prolongation towards said wedge bar (11), on that end of which, which faces said heating medium valve (12a, 12b), at least one pressure member (52) is formed, preferably in the form of a laterally slotted or, preferably, three press pins arranged along the periphery of a circle having bell, by the shape of which it is solely said heating medium valve (12a, 12b) or said heating medium valve locking part (12a), but not said wedge bar (11) or said service water valve (13a, 13b), that is pressure biased or contacted, wherein said intermediate wedge bar (51) is preferably integrally formed by a continuous member, or is assembled from several individual members, which cooperate in axial direction or are interconnected in a non-positive or a positive manner.

7. Device according to any of claims 1 to 6, **characterised in that** said wedge bar (11) is integrally formed by a continuous member or is assembled from several individual members, which cooperate in axial direction or are interconnected in a non-positive and/or a positive manner.

8. Device according to any of claims 1 to 4, or, in case that an intermediate member (50) is provided, according to any of claims 5 to 7, **characterised in that** the position of said heating medium valve (12a, 12b) is arranged between said service water valve (13a, 13b) and said thermostatically controlled regulator (4) or the intermediate member (50) and/or that said pressure controlled regulator (1) and said thermostatically controlled regulator (4) are arranged in opposing end regions of the, particularly elongated, device.

9. Device according to any of claims 1 to 8, **characterised in that** in the device, there is provided at least one spring (14), which is arranged in the region of said service water valve (13a, 13b), particularly in said service water valve seat (13b), wherein said spring (14) urges said service water valve locking part (13a) in closing direction of said service water valve (13a, 13b), thus urging also said heating medium valve locking part (12a) via said wedge bar (11) in closing direction of said heating medium valve (12a, 12b), and wherein said spring (14) acts as a counter-force to the force exerted by said pressure controlled regulator (1), closing both the service water valve (13a, 13b) and the heating medium valve (12a, 12b) when the pressure of said pressure controlled regulator (1) abates.

10. Device according to any of claims 1 to 9, **characterised in that** in the region of said heating medium valve (12a, 12b), at least one further spring (35) is provided, particularly weaker in comparison to spring (14), which acts as a counter-force in opening direction of said heating medium valve (12a, 12b) to the force exerted by said thermostatically controlled regulator (4) onto said heating medium valve locking part (12a), wherein the force of said further spring (35) us smaller than the force of spring (14), in particular being negligibly small with respect to the force of spring (14).

11. Device according to any of claims 1 to 10, **characterised in that** said thermostatically controlled regulator (4) or the temperature sensor (5) work in accordance with the tension principle, wherein in said temperature sensor (5) a temperature proportional pressure is formed, which is transmitted via a capillary tube (6) to an expansion member (24) of said regulator (4).

12. Device according to any of claims 6 to 11, **characterised in that** said thermostatically controlled regulator (4) comprises an intermediate piece (22), which transmits its actuating power in particular onto said intermediate wedge bar (51) and, thus, onto said heating medium valve locking part (12a), the initial position of said intermediate piece (22) being assigned to a nominal value temperature of the service water (19), and said intermediate piece (22), at a higher actual value temperature of the service water (19) determined by said temperature sensor (5), is moved by a predetermined stroke, assigned to the temperature difference between the nominal value temperature and the actual value temperature, in closing direction of said heating medium valve (12a, 12b), and, with a lower actual value temperature of the service water (19), by a predetermined opposing stroke, assigned to the corresponding temperature difference, in opening direction of said heating medium valve (12a, 12b).

13. Device according to any of claims 1 to 12, **characterised in that** between the service water supplying connection piece (9) and the service water valve (13a, 13b), at least two cross-flow openings (45), preferably being opposed, particularly elongated and, as preferred, transversely to the longitudinal extension of said wedge bar (11) oriented, are formed for the service water (19) in said service water valve seat (13b), at least one of them, preferably both, being able to be closed at least in part, particularly completely, by said service water valve locking part (13a) and/or that said pressure controlled regulator (1) comprises a diaphragm disk (16) detachably plugged or slipped onto the end of said wedge bar (11), wherein in particular that surface of the diaphragm disk (16), which faces said service water valve (13a, 13b), comprises a number, preferably eight, particularly uniformly distributed, of supporting lamellae oriented in radial direction towards the centre of said diaphragm disk (16).

14. Device according to any of claims 1 to 13, **characterised in that** said service water valve (13a, 13b), said heating medium valve (12a, 12b), said pressure controlled regulator (1), said intermediate member (50) and, optionally, said thermostatically controlled regulator (4) too, are arranged in common in a one-part housing or are surrounded in common by a one-part housing, or that the device is constructed in a modular manner and, in particular, said pressure controlled regulator (1) in common with the service water portion (3), the distant heating portion (2) and said thermostatically controlled regulator (4) exist as modules to be interconnected.

15. Radiator or heat exchanger comprising a device according to any of claims 1 to 14.

## Revendications

1. Dispositif pour réguler la température d'eau non potable (19), qui est chauffé au moyen d'un milieu de chaleur (18), en particulier au moyen d'eau de chauffage à distance, dans un échangeur de chaleur, comprenant une soupape d'eau non potable (13a, 13b), qui commande l'écoulement de l'eau non potable (19) vers l'échangeur de chaleur, et une soupape de milieu de chaleur (12a, 12b), qui commande l'écoulement du milieu de chaleur (18) à partir de l'échangeur de chaleur, ladite soupape d'eau non potable (13a, 13b) comprenant un siège de soupape d'eau non potable (13b) et une partie de fermeture de soupape d'eau non potable (13a) mobile relativement à ceci et, en particulier, cylindrique ou conique, tandis que la soupape de milieu de chaleur (12a, 12b) comprend un siège de soupape de milieu de chaleur (12b) et une partie de fermeture de soupape de milieu de chaleur (12a) mobile relativement à ceci et, en particulier, cylindrique ou conique, la soupape d'eau non potable (13a, 13b) et la soupape de milieu de chaleur (12a, 12b) coopérant l'une avec l'autre par une barre de coincement (11), dans lequel un régulateur commandé par pression (1) est prévu, qui agit sur la barre de coincement (11) et ainsi ajuste ou ouvre ou ferme particulièrement la soupape d'eau non potable (13a, 13b) en fonction de la reprise d'eau non potable (19), et dans lequel de plus un régulateur commandé de façon thermostatique (4) est prévu, qui agit sur ou ajuste exclusivement la soupape de milieu de chaleur (12a, 12b), de préférence directement la partie de fermeture de soupape de milieu de chaleur (12a), en fonction de la température de l'eau non potable (19), particulièrement mesurée par un capteur de température (5) après la sortie de l'eau non potable (19) à partir de l'échangeur de chaleur,
**caractérisé en ce, que** la partie de fermeture de soupape de milieu de chaleur (12a) est logée à la barre de coincement (11) d'une façon mobile ou ajustable ou découplée relativement à l'étendue longitudinale de la barre de coincement (11), et que la partie de fermeture de soupape d'eau non potable (13a) est reliée à la barre de coincement (11) d'une manière fixe et stable.

2. Dispositif selon la revendication 1, **caractérisé en ce, que** le régulateur commandé de façon thermostatique (4) agit sur ou contacte exclusivement la partie de fermeture de soupape de milieu de chaleur (12a) et ajuste ceci relativement à l'étendu longitudinale de la barre de coincement (11), dans lequel en particulier la barre de coincement (11) et/ou la soupape d'eau non potable (13a, 13b) est, de préférence complètement, libre d'une charge de pression ou d'une action par le régulateur commandé de façon thermostatique (4).

3. Dispositif selon la revendication 1 à 2, **caractérisé en ce, que** la soupape d'eau non potable (13a, 13b) peut être commandé par le régulateur commandé par pression (1) d'une façon, que la soupape d'eau non potable (13a, 13b) est ouverte, si l'on soutire de l'eau non potable (19) ou il écoule vers l'échangeur de chaleur, et que la soupape d'eau non potable (13a, 13b) et la soupape de milieu de chaleur (12a, 12b) peuvent être commandées ou surrégulées indépendamment par le régulateur commandé de façon thermostatique (4) de manière, que la soupape d'eau non potable (13a, 13b) ainsi que la soupape de milieu de chaleur (12a, 12b) sont fermées, si l'on ne soutire pas de l'eau non potable (19), dans lequel le cas échéant des positions intermédiaires sont prévues aussi et/ou que le régulateur commandé par pression (1) agit exclusivement en direction de fermeture à la soupape de milieu de chaleur (12a, 12b)

4. Dispositif selon une quelconque des revendications 1 à 3, **caractérisé en ce, que** la soupape de milieu de chaleur (12a, 12b) peut être commandé par le régulateur commandé de façon thermostatique (4) d'une façon, que la soupape de milieu de chaleur (12a, 12b) est ouverte, si la température de l'eau non potable (19) après sa sortie de l'échangeur de chaleur se trouve au-dessous d'un certain valeur, et que la soupape de milieu de chaleur (12a, 12b) est fermée, si la température de l'eau non potable (19) dépasse ce valeur, la soupape d'eau non potable (13a, 13b) demeurant encore ouverte, particulièrement de façon inchangée, de préférence complètement, indépendamment de la position de la soupape de milieu de chaleur (12a, 12b), ou que le régulateur commandé de façon thermostatique (4) surrègle ou ferme la soupape de milieu de chaleur (12a, 12b) indépendamment de la position de la soupape d'eau non potable (13a, 13b).

5. Dispositif selon une quelconque des revendications 1 à 4, **caractérisé en ce, que** le régulateur commandé de façon thermostatique (4) agit sur la soupape de milieu de chaleur (12a, 12b) ou à la partie de fermeture de soupape de milieu de chaleur (12a) par un élément intermédiaire (50) disposé entre le régulateur commandé de façon thermostatique (4) et la soupape de milieu de chaleur (12a, 12b).

6. Dispositif selon la revendication 5, **caractérisé en ce, que** l'élément intermédiaire (50) comprend une barre de coincement intermédiaire (51) à charger par une pièce intermédiaire (22) du régulateur commandé de façon thermostatique (4), particulièrement orientée en prolongation de la barre de coincement (11), au moins un élément de pression (52) étant formé à ce bout de ladite barre de coincement intermédiaire, qui est en face de la soupape de milieu de chaleur (12a, 12b), de préférence en forme d'une cloche latéralement fendue ou, préférablement, ayant trois chevilles de pression disposées le long de la périphérie d'un cercle, par la conformation de laquelle c'est seulement la soupape de milieu de chaleur (12a, 12b) ou la partie de fermeture de soupape de milieu de chaleur (12a), mais pas la barre de coincement (11) ou la soupape d'eau non potable (13a, 13b), qui sont chargées par pression ou sont contactées, dans lequel la barre de coincement intermédiaire (51) est préférablement est formé en une partie par un élément continu ou de plusieurs éléments individuels, qui coopèrent axialement l'un avec l'autre ou sont reliés l'un avec l'autre par adhérence et/ou d'une manière clabotée.

7. Dispositif selon une quelconque des revendications 1 à 6, **caractérisé en ce, que** la barre de coincement (11) est formée en une partie par un élément continu ou de plusieurs éléments individuels, qui coopèrent axialement l'un avec l'autre ou sont reliés l'un avec l'autre par adhérence et/ou d'une manière clabotée.

8. Dispositif selon une quelconque des revendications 1 à 4, ou, si un élément intermédiaire (50) existe, selon une quelconque des revendications 5 à 7, **caractérisé en ce, que** la soupape de milieu de chaleur (12a, 12b) est disposé à une position entre la soupape d'eau non potable (13a, 13b) et le régulateur commandé de façon thermostatique (4) ou l'élément intermédiaire (50), et/ou que le régulateur commandé par pression (1) et le régulateur commandé de façon thermostatique (4) sont disposés dans des zones de bout opposées du dispositif, particulièrement oblongues.

9. Dispositif selon une quelconque des revendications 1 à 8, **caractérisé en ce, que** dans le dispositif au moins un ressort (14) est prévu, disposé dans la zone de la soupape d'eau non potable (13a, 13b), particulièrement dans le siège de soupape d'eau non potable (13b), ledit ressort (14) pressant la partie de fermeture de soupape d'eau non potable (13a) en direction de fermeture de la soupape d'eau non potable (13a, 13b), et ainsi aussi la partie de fermeture de soupape de milieu de chaleur (12a), à travers la barre de coincement (11) en direction de fermeture de la soupape de milieu de chaleur (12a, 12b), et dans lequel le ressort (14) agit comme force antagoniste contre la force exercée par le régulateur commandé par pression (1) et ferme la soupape d'eau non potable (13a, 13b) ainsi que la soupape de milieu de chaleur (12a, 12b), quand la pression du régulateur commandé par pression (1) se relâche.

10. Dispositif selon une quelconque des revendications 1 à 9, **caractérisé en ce, que** dans la zone de la soupape de milieu de chaleur (12a, 12b) au moins un autre ressort (35) est prévu, particulièrement plus faible en comparaison avec le ressort (14), qui agit comme force antagoniste à la force exercée par le régulateur commandé de façon thermostatique (4) à la partie de fermeture de soupape de milieu de chaleur (12a) en direction d'ouverture de la soupape de milieu de chaleur (12a, 12b), la force de l'autre ressort (35) étant plus petite que la force du ressort (14), particulièrement petite d'une façon négligeable par rapport à la force du ressort (14).

11. Dispositif selon une quelconque des revendications 1 à 10, **caractérisé en ce, que** le régulateur commandé de façon thermostatique (4) ou le capteur de température (5) travaillent selon le principe de tension, dans lequel une pression proportionnelle à la température est formée dans le capteur de température (5), qui est transmise à travers d'un tube capillaire (6) à un élément d'expansion (24) du régulateur (4).

12. Dispositif selon une quelconque des revendications 6 à 11, **caractérisé en ce, que** le régulateur commandé de façon thermostatique (4) comprend une pièce intermédiaire (22), qui transmet sa puissance de réglage particulièrement à la barre de coincement intermédiaire (51) et ainsi à la partie de fermeture de soupape de milieu de chaleur (12a), la position initiale de la pièce intermédiaire (22) étant associée à une température d'un valeur de consigne de l'eau non potable (19), et la pièce intermédiaire (22) à une température d'un valeur actuel plus haute de l'eau non potable (19), qui est déterminée par le capteur de température (5), étant mû par une levée prédéterminé et associée à la différence de température entre température du valeur de consigne et la température du valeur actuelle en direction de fermeture de la soupape de milieu de chaleur (12a, 12b), et avec une température de valeur actuel plus bas de l'eau non potable (19) étant mû par une levée prédéterminée opposée, qui est associée à la différence correspondante de température, en direction d'ouverture de la soupape de milieu de chaleur (12a, 12b).

13. Dispositif selon une quelconque des revendications 1 à 12, **caractérisé en ce, qu'**entre la tubulure d'alimentation en eau non potable (9) et la soupape d'eau non potable (13a, 13b), au moins deux ouvertures d'écoulement (45) pour l'eau non potable, de préférence en opposition, particulièrement oblongues et de préférence orientées transversalement à l'étendue longitudinale de la barre de coincement (11), sont formées dans le siège de soupape d'eau non potable (13b), dont au moins une, de préférence tous les deux peut/peuvent être fermée au moins en partie, en particulier complètement, par la partie de fermeture de soupape d'eau non potable (13a) et/ou que le régulateur commandé par pression (1) comprend une disque à membrane intégrée (16), qui est attachée ou poussée d'une manière détachable au bout de la barre de coincement (11), dans lequel en particulier la surface de la disque à membrane intégrée (16), qui est en face de la soupape d'eau non potable (13a, 13b), comprend un nombre, préférablement huit, en particulier distribuées d'une façon uniforme, des lamelles d'appui, qui sont orientées radialement vers le centre de la disque à membrane intégrée (16).

14. Dispositif selon une quelconque des revendications 1 à 13, **caractérisé en ce, que** la soupape d'eau non potable (13a, 13b), la soupape de milieu de chaleur (12a, 12b), le régulateur commandé par pression (1), l'élément intermédiaire (50) et, le cas échéant, le régulateur commandé de façon thermostatique (4) aussi, sont disposés en commun dans un boîtier en une partie ou sont entourés en commun par un boîtier en une partie, ou que le dispositif est construit d'une façon modulaire, et en particulier ce sont le régulateur commandé par pression (1) en commun avec la partie d'eau non potable (3), la partie de chaleur à distance (2) et le régulateur commandé de façon thermostatique (4), qui existent comme des modules à relier l'un à l'autre.

15. Radiateur ou échanger de chaleur avec un dispositif selon une quelconque des revendications 1 à 14.
